# EUROPEAN PATENT SPECIFICATION

(11) **EP 2 000 952 B1**
(45) Date of publication and mention of the grant of the patent: **12.06.2013**
(21) Application number: 08006370.4
(22) Date of filing: 31.03.2008
(51) Int. Cl.: G06K 9/00, G08B 17/12

(54) **Smoke detecting method and device**
Verfahren und Vorrichtung zur Raucherkennung
Procédé et dispositif de détection de fumée

(30) Priority: 31.05.2007 CN 200710108526; 11.12.2007 TW 96147299
(43) Date of publication of application: 10.12.2008
(73) Proprietor: Industrial Technology Research Institute, 310 Hsinchu County (TW)
(72) Inventor: Chang, Shen-Kuen, Chiayi City (TW); Lu, Chung-Hsien, Jhubei City Hsinchu County (TW); Chao, Hao-Ting, Dadu Township Taichung County (TW); Chang, Shih-Hua, Sinfong Township Hsinchu County (TW); Hsu, Yu-Ren, Daliao Township Kaohsiung County (TW); Huang, Kun-Lin, Hsinchu City (TW); Wang, Cheng-Wei, Tainan City (TW)
(74) Representative: Bittner, Thomas L.

(56) References cited:
- EP-A1- 1 220 178
- WO-A1-00/23959
- WO-A2-02/054364
- US-A1- 2006 115 154
- TOREYIN, B U. ET AL.: "Wavelet Based Real-Time Smoke Detection in Video" 13TH EUROPEAN SIGNAL PROCESSING CONFERENCE EUSIPCO September 2005 (2005-09), XP002577569 Antalya Retrieved from the Internet: URL:http://www.cs.bilkent.edu.tr/~yigithan /publications/eusipco2005.pdf> [retrieved on 2010-04-09]
- BLEIWEISS M P ET AL: "Stereo passive remote sensing of aerosol transport and diffusion" GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRET ATION., INTERNATIONAL PASADENA, CA, USA 8-12 AUG. 1994, NEW YORK, NY, USA,IEEE, US LNKD- DOI:10.1109/IGARSS.1, vol. 4, 8 August 1994 (1994-08-08), pages 1907-1910, XP010138657 ISBN: 978-0-7803-1497-9
- YUAN ET AL: "A fast accumulative motion orientation model based on integral image for video smoke detection" PATTERN RECOGNITION LETTERS, ELSEVIER, AMSTERDAM, NL, vol. 29, no. 7, 29 January 2008 (2008-01-29), pages 925-932, XP022549886 ISSN: 0167-8655
- MARBACH G ET AL: "An image processing technique for fire detection in video images" FIRE SAFETY JOURNAL, ELSEVIER LNKD- DOI:10.1016/J.FIRESAF.2006.02.001, vol. 41, no. 4, 1 June 2006 (2006-06-01), pages 285-289, XP025086694 ISSN: 0379-7112 [retrieved on 2006-06-01]
- PING-HE HUANG ET AL: "A Fire-Alarming Method Based on Video Processing" INTELLIGENT INFORMATION HIDING AND MULTIMEDIA SIGNAL PROCESSING, 2006. IIH-MSP '06. INTERNATIONAL CONFERENCE ON, IEEE, PI, 1 December 2006 (2006-12-01), pages 359-364, XP031034071 ISBN: 978-0-7695-2745-1

## Description

The present invention relates to a smoke detecting method and device, and more particular, to a smoke detecting method and device using the image analysis methods.

In most fires, the smoke is usually generated first, followed by the occurrence of flames. In some fires, burning of some substances generates the smoke only. Therefore, the smoke detection is a very important object for fire prevention and rescue. When using a smoke detecting system, a fire can be reported at its early stage so that the early fire fighting may be proceeded to reduce the casualties.

The conventional smoke detecting devices, such as a photoelectric smoke detector and an air sampling smoke detector, use the physical properties resulting from increase of the smoke particles as the basis of fire detection. The photoelectric smoke detector emits the light. The light is scattered and the brightness is changed when smoke particles exist in the air. Because the photoelectric smoke detector detects the variation of the brightness by light emitting to determine if there is a fire, the detecting range thereof is restricted. Therefore, the smoke detecting in large areas by the photoelectric smoke detector may not be effective. The air sampling smoke detector collects the air sample in the detecting area and analyzes the elements of the collected air to determine if there is a fire. To collect the air sample, the air sampling smoke detector must be equipped with a duct system for facilitating the detection. Besides, the sensors of the air sampling smoke detector are very expensive.

Accordingly, the conventional smoke detecting devices have the shortcomings as follows: 1) it is hard to detect a smoke in high and large-area buildings, such as the factories, the stadiums and the shopping malls, thereby wasting the early rescuing time; 2) the accuracy thereof is too low, thereby causing too many false alarms; and 3) a large number of sensors, ducts and controlling systems needs to be installed, thereby raising the cost.

Therefore, for improving the accuracy of the smoke detecting device and reducing the cost, the visual smoke detecting device has been recently developed, which identifies if there is any object whose features meet the fire smoke by using the original monitoring system in a building. Once the smoke detecting device determines the object as the fire smoke, an alarm will be generated. U.S. Patent No. 6,184,792 discloses a method and apparatus for detecting early fire in a monitored area, which analyzes a brightness variation of video images by performing a Fast Fourier Transform (FFT) on the temporally varying pixel intensities, and U.S. Patent No. 6, 596, 485 discloses a fire detection algorithm to analyze a frequency variation by a filter-analyzing technology. However, the accuracy of these detecting methods is not mentioned in theses patents, and other analyzing techniques, e.g. a chrominance variation analysis, are not applied in these patents.

There is a paper disclosing a method for smoke detection in video (Wavelet Based Real-Time Smoke Detection in video, September 2005 (2005-09), Antalya 13th European Signal Processing Conference EUSIPCO). In the mentioned paper, to determine the smoke in the field of view of the camera, the decrease in high frequency content corresponding to edges in moving regions is checked by using the spatial wavelet transform, if the edges loose their sharpness without vanishing completely, the decreases in U and V channels of them are checked, flicker analysis is carried out using the temporal wavelet transform, and finally the shape of the moving region is checked for convexity.

Document WO 00/23959 discloses a smoke detection system including video camera monitoring means, video frame comparison means, signal processing means, and alarm generating means dependent on an output from the signal processing means; the signal processing means being arranged to analyze successive frames acquired by the video camera monitoring means and to compare the intensity and/or color of individual pixels or group of pixels to consider the overall characteristics and inter-relationships of these pixels so as to detect the presence of smoke, wherein the signal processing means analyses a plurality of different types of changes in the said characteristics and inter-relationships.

Document WO 02/054364 discloses a video smoke detection system comprising at least one device for recording video images and one signal processing step, wherein the illumination of a single pixel or a group of pixels in the video images is determined. The illumination of the pixel is determined by means of a process wherein a value representing the illumination is obtained. The temporal progression of the above-mentioned value is examined for characteristic changes in the presence of smoke.

Document EP 1220178 discloses a system having at least one device for acquiring video images and a signal processing stage in which the intensity of the individual pixels or that of groups of pixels is determined by a process in which a value representing the intensity is obtained and the variation of the value with time is investigated for a variation characteristic of the occurrence of smoke.

Document US 2006/0115154 discloses fire detection and smoke detection by using an image capturing device to obtain images from a predetermined area, and adopting an RGB (red, green, blue) color model based chromatic and disorder measurement for extracting fire pixels and smoke pixels. The extracted pixels are inputted to a fire detection fuzzy alarm system to generate an output of alarm information. Based on iterative checking on the growing ratio of the alarm information, a fire alarm is released accordingly. Document WO 00/23959 discolses a smoke defection system and method arranged to analyse the temporal variations of the pixels identified as belonging to the edges in a series of images by combining a rule based analysis with a statistically based analysis.

In order to overcome the drawbacks in the prior art, a novel smoke detecting method and device are provided. Not only does the present invention solve the problems described above, but also it achieves high accuracy of the smoke detection. Therefore, the present invention has its utility for the industry.

In accordance with one aspect of the present invention, a smoke detecting method according to claim 1 is provided.

In accordance with another aspect of the present invention, a smoke detecting device according to claim 13 is provided.

Also, a smoke detecting method is provided. The smoke detecting method comprises capturing a plurality of images, the images comprising a background image and an analyzable image having a moving object; analyzing at least one variation of S, U, V and I values of each pixel displaying the moving object in the analyzable image; and determining if the moving object is a smoke by comparing analyzed results from the analyzing step with a corresponding predetermined feature.

Further, a smoke detecting device is provided. The smoke detecting device comprises an image capturing device capturing a plurality of images, the images comprising a background image and an analyzable image having a moving object; an analyzing device coupled to the image capturing device, and analyzing at least one variation of S, U, V and I values of each pixel displaying the moving object in the analyzable image; a determining device coupled to the analyzing device for determining if the moving object is a smoke by comparing analyzed results obtained from the analyzing device with a corresponding predetermined feature.

Also, a smoke detecting method is provided. The smoke detecting method comprises capturing a plurality of images, the images comprising a background image and an analyzable image having a moving object;
analyzing an edge blur of the analyzable image by detecting an edge pixel(s) in a plurality of pixels displaying the moving object in the analyzable image and analyzing a strength value variation of each of the edge pixel(s); and determining if the moving object is a smoke by comparing analyzed results from the analyzing step with a corresponding predetermined feature.

Further, a smoke detecting device is provided. The smoke detecting device comprises an image capturing device capturing a plurality of images, the images comprising a background image and an analyzable image having a moving object; an analyzing device coupled to the image capturing device, detecting an edge pixel(s) in a plurality of pixels displaying the moving object in the analyzable image, and analyzing a strength value variation of each of the edge pixel(s); and a determining device coupled to the analyzing device for determining if the moving object is a smoke by comparing analyzed results obtained from the analyzing device with a corresponding predetermined feature.

Also, a smoke detecting method is provided. The smoke detecting method comprises capturing a plurality of images, the images comprising an analyzable image having a moving object; analyzing a centroid of the moving object and if the moving object is expanding within a predetermined time period; and determining if the moving object is a smoke by comparing analyzed results from the analyzing step with a corresponding predetermined feature.

Also, a smoke detecting device is provided. The smoke detecting device comprises an image capturing device capturing a plurality of images, the images comprising an analyzable image having a moving object; an analyzing device coupled to the image capturing device, analyzing a centroid of the moving object and if the moving object is expanding within a predetermined time period; and a determining device coupled to the analyzing device for determining if the moving object is smoke by comparing analyzed results obtained from the analyzing device with a corresponding predetermined feature.

Fig. 1 is a diagram showing a flow chart of a smoke detecting method according to an embodiment in the present invention;

Fig. 2 is a diagram showing a smoke detecting device according to an embodiment of the present invention;

Fig. 3 is a diagram showing a smoke detecting device according to another embodiment of the present invention; and

Fig. 4 is a diagram showing a smoke detecting device according to further another embodiment of the present invention.

The present invention will now be described in detail with reference to the accompanying drawings, wherein the same reference numerals will be used to identify the same or similar elements throughout the several views. It should be noted that the drawings should be viewed in the direction of orientation of the reference numerals.

To overcome the drawbacks of the conventional fire smoke detecting device which causes the false alarms and delays the rescuing action, the present invention provides a novel smoke detecting method and device. In the smoke detecting method and device as illustrated, several analyzing methods and devices are optionally used to analyze a feature of an analyzable image having a moving object, and analyzed results obtained from the respective analyzing devices are compared with a corresponding predetermined feature, which comprises a chrominance variation, an edge blur, a flickering frequency and an action pattern collected from at least one predetermined image having a sample smoke and stored in a database. If the compared result is positive and the moving object is determined as a smoke, the feature of the analyzable image may also be collected into the database for a future use. The thresholds of each predetermined feature are the enormous experimental and statistic calculated data from different images having fire smoke. Therefore, such analyzing and comparing processes can more accurately identify an image having fire smoke.

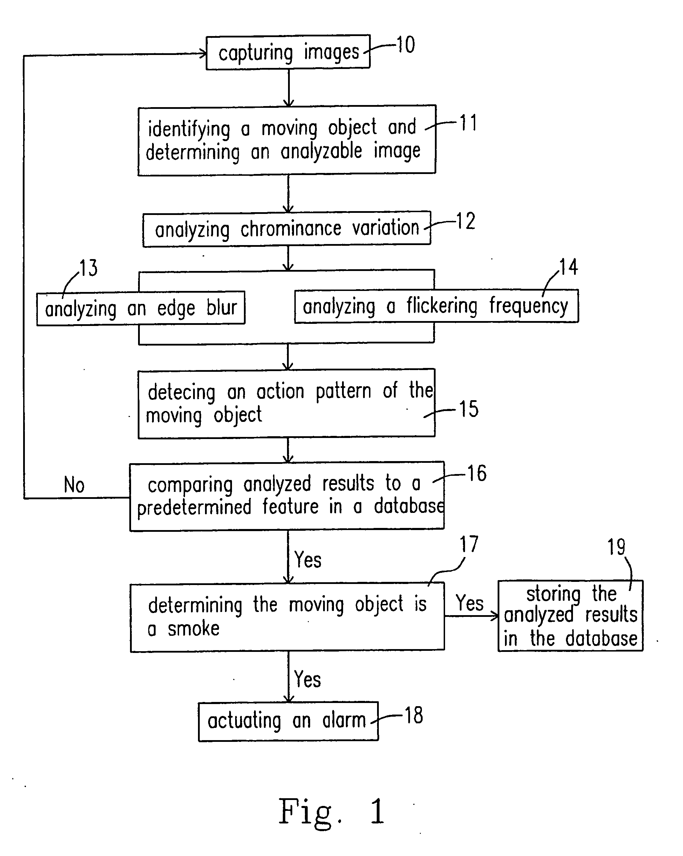

Fig. 1 shows a flow chart of the smoke detecting method according to an embodiment in the present invention. First, a plurality of images are captured by a camera in a monitored area (step 10). Then it is determined whether at least one of the plurality of images having a moving object is identified and the image having the moving object is determined as an analyzable image (step 11). The step 11 may further comprise a step of determining one of the plurality of images as a background image. After the analyzable image is determined in the step 11, a chrominance variation of the analyzable image is analyzed (step 12), an edge blur of the analyzable image is analyzed (step 13), a flickering frequency of the analyzable image is analyzed (step 14), and an action pattern of the moving object is detected (step 15). It should be noted that although Fig. 1 shows that the steps 12-15 are carried out consecutively, the above mentioned steps can also be carried out optionally without a specific sequence. For example, some of the steps 12-15 can be selectively performed or skipped. After obtaining analyzed results from at least one of the steps 12-15, the analyzed results are compared with a predetermined feature in a database (step 16). If at least one of the analyzed results conforms to the predetermined feature, it is determined that the moving object is a smoke (step 17). If the moving object is determined as the smoke, an alarm is actuated (step 18) and/or the analyzed results are stored in the database (step 19).

In the above-mentioned embodiment, the predetermined feature is collected from at lease one predetermined image having a sample smoke, which comprises a chrominance variation, an edge blur, a flickering frequency, an action pattern and so on, and the predetermined feature is stored in the database. Furthermore, the smoke detecting method may further comprise a step of setting a location in the background image as a no-analyzing location before determining one of the plurality of images as the analyzable image in the step 11. The no-analyzing location is a location in the monitored area unlikely a fire occurs therein, such as a pool.

In the illustrated smoke detecting method, the moving object is displayed by a group of pixels in the analyzable image, the background image has a portion displayed by the same group of pixels, and the analyzable image may be compared with the same group of pixels in the background image to obtain the analyzed results in the step 12 and the step 13. The step 12 comprises a step of detecting an S value of each of the group of pixels in the analyzable image, and the analyzed result of the step 12 will be determined to conform to the predetermined feature in the step 16 if the S value of the each pixel is less than 0.2.

Furthermore, the step 12 further comprises the steps of detecting if each of the group of pixels in the analyzable image is a gray-level pixel, and detecting the respective variation in S, Y, U and V values of each of the group of pixels in the analyzable image when compared with the same group of pixels in the background image. When the pixel in the analyzable image is a gray-level pixel, and if the S value of that pixel in the analyzable image is lower than the S value of the same pixel in the background image (i.e., the variation of the S value is negative) and the Y value of that pixel in the analyzable image is higher than the Y value of the same pixel in the background image (i.e., the variation of the Y value is positive), the analyzed result of the step 12 will be determined to conform to the predetermined feature in the step 16. Alternatively, when the pixel is not a gray-level pixel in the analyzable image (i.e., when the pixel is a color pixel), and if the respective absolute value of the U value and V value of that pixel in the analyzable image are lower than the respective absolute value of the U value and V value of the same pixel in the background image (i.e., the variation of the U value and V value is negative) and the Y value of that pixel in the analyzable image is higher than the Y value of the same pixel in the background image (i.e., the variation of the Y value is positive), the analyzed result of the step 12 will also be determined to conform to the predetermined feature in the step 16.

Moreover, the step 12 further comprises the steps of calculating the difference of the I values of each of the group of pixels between the background image and the analyzable image, and defining a first number of pixels, each of which has the difference smaller than a first predetermined value, and the analyzed result of the step 12 will be determined to conform to the predetermined feature in the step 16 if a ratio of the first number to the total number of the group of pixels is larger than a second predetermined value. Preferably, the first predetermined value is 100, and the second predetermined value is 0.7.

In the step 12, the S, Y, U, V and I values are obtained from detecting at least one of the color models RGB, HSI and YUV for each of the group of pixels in the analyzable image and the background image. Generally, the RGB value is detected first, and then is transformed to the HSI and YUV values.

In the illustrated smoke detecting method, the step 13 comprises the steps of detecting a number of edge pixels in the group of pixels, and calculating a first strength value of each of the edge pixels in the analyzable image and a second strength value of each corresponding pixel in the background image via edge detection operators, such as Prewitt, Sobel, and Laplacian operators. Subsequently, if a ratio of the first strength value to the second strength value for a particular edge pixel is less than a predetermined value (preferably in a range of 0.2 to 0.75), that particular edge pixel of the first number of edge pixels is defined as an edge blur pixel. Therefore, the number of the edge blur pixels in the edge pixels is detected. The analyzed result of the step 13 will be determined to conform to the predetermined feature in the step 16 if a ratio of the number of the edge blur pixels to the number of the edge pixels is within a predetermined range. Preferably, the predetermined range is 0.1 to 0.9.

In the illustrated smoke detecting method, the step 14 is to analyze the brightness of the analyzable image varying within a predetermined time period by using a time wavelet calculation, preferably a one-dimensional time wavelet calculation. If the flickering frequency of the analyzable image is in a range of 0.5-5Hz, the analyzed result of the step 14 will be determined to conform to the predetermined feature in the step 16.

In the illustrated smoke detecting method, the step 15 comprises the steps of detecting a centroid of the moving object and detecting if the moving object is expanding within a predetermined time period, and the analyzed result of the step 15 will be determined to conform to the predetermined feature in the step 16 if the centroid is moving in one of the upward and downward directions within the predetermined time period while the moving object expands within the predetermined time period.

More specifically, when the centroid of the moving object continuously moves upward within a predetermined time period, and an area of the moving object is expanding within the predetermined time period, it is further determined that the fire is a plume-type fire. On the other hand, when the centroid of the moving object continuously moves downward in a specific location (e.g., a ceiling) within a predetermined time period, and an area of the moving object is expanding within the predetermined time period, it is further determined that the fire is an accumulative-type fire.

In an embodiment, the step 14 and the step 15 are carried out when the analyzed results of the step 12 and the step 13 have been already determined to conform to the predetermined feature by the step 16, and the step 17 is carried out when all of the analyzed results obtained from the steps 12-15 have been determined to conform to the predetermined feature by step 16. However, to increase the efficiency and reduce the complexity of the smoke detecting method, the steps 12-15 can be randomly and optionally carried out without a specific sequence.

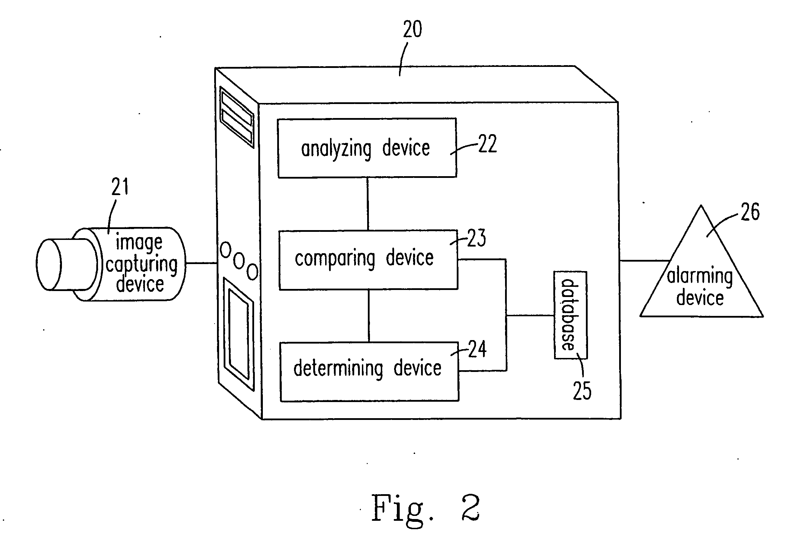

Fig. 2 shows a smoke detecting device according to an embodiment of the present invention. The smoke detecting device comprises an image capturing device 21, an analyzing device 22, a comparing device 23, a determining device 24, a database 25 and an alarming device 26. The image capturing device 21 can be a web camera, a cable camera, etc. for capturing a video segment comprising a plurality of images, wherein at least one of the plurality of images is a background image. The analyzing device 22 can be located in a computer 20 for identifying if at least one of the plurality of images has a moving object, determining the image having the moving object as an analyzable image, analyzing a chrominance variation, an edge blur, and a flickering frequency of the analyzable image, and detecting an action pattern of the moving object. The comparing device 23 is coupled to the analyzing device 22 for comparing analyzed results obtained from the analyzing device 22 with a predetermined feature in the database 25, and the determining device 24 is coupled to the comparing device 23 for determining that the moving object is a smoke if at least one of the analyzed results conforms to the predetermined feature.

The database 25 stores the predetermined feature comprising a chrominance variation, an edge blur, a flickering frequency and an action pattern collected from at lease one predetermined image having a sample smoke. The alarming device 26 coupled to the computer 20 is for actuating an alarm when the moving object is determined as the smoke by the determining device 24. To enhance the accuracy of the determining device 24 in different situations, the user can optionally set which ones of the analyzed results obtained from the analyzing device 22 must conform to the predetermined feature before the alarming device 26 is actuated.

The detailed analyzing methods for analyzing the chrominance variation, the edge blur, the flickering frequency, and the action pattern of the moving object have been described in the above-mentioned embodiments of the smoke detecting method and illustrated in Fig. 1. In addition to the technical features disclosed in the illustrated embodiments, the chrominance variance and the edge blur of an image can also be analyzed by using a two-dimensional space wavelet calculation.

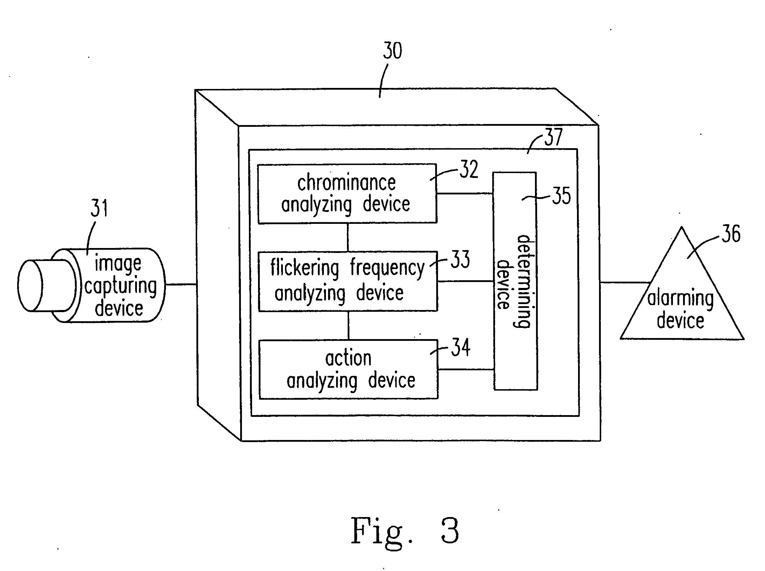

Fig. 3 shows a smoke detecting device according to another embodiment of the present invention. The smoke detecting device comprises a digital video recorder 30, an image capturing device 31, and an alarming device 36. The digital video recorder 30 comprises a digital signal processing chip 37, which contains a chrominance analyzing device 32, a flickering frequency analyzing device 33, an action analyzing device 34 and a determining device 35.

The image capturing device 31 captures a video segment comprising a plurality of images, wherein one of the plurality of images is a background image and another one of the plurality of images is an analyzable image having a moving object. The plurality of images are transmitted and recorded in the digital video recorder 30. The chrominance analyzing device 32 analyzes a chrominance variation of the analyzable image, the flickering frequency analyzing device 33 analyzes a flickering frequency of the analyzable image, and the action analyzing device 34 detects a centroid of the moving object and if the moving object is expanding within a predetermined time period. The determining device 35 compares analyzed results obtained from at least one of the chrominance analyzing device 32, the flickering frequency analyzing device 33 and the action analyzing device 34 with a predetermined feature, and determines that the moving object is a smoke if at least one of the analyzed results conforms to the predetermined feature. In an embodiment, the determining device 35 can be set to determine the moving object is a smoke when all of the analyzed results conform to the predetermined feature.

When the moving object is determined as the smoke by the determining device 35, the alarm device 36 coupled to the digital signal processing chip 37 will send an alarm signal to a central controlling computer of the fire monitoring center, a smoke signal receiver or a cell phone.

Furthermore, an edge blur analyzing device analyzing an edge blur of the analyzable image can be used to replace at least one of the chrominance analyzing device 32, the flickering frequency analyzing device 33 and the action analyzing device 34. For example, the flickering frequency analyzing device 33 may be substituted by the edge blur analyzing device. Of course, the digital video recorder 30 can also further include edge blur analyzing device, in addition to the chrominance analyzing device 32, the flickering frequency analyzing device 33 and the action analyzing device 34.

The technical features of the analyzing methods of the chrominance analyzing device 32, the flickering frequency analyzing device 33, the action analyzing device 34 and the edge blur analyzing device have been described in the above-mentioned embodiments of the smoke detecting method according to the embodiment illustrated in Fig. 1.

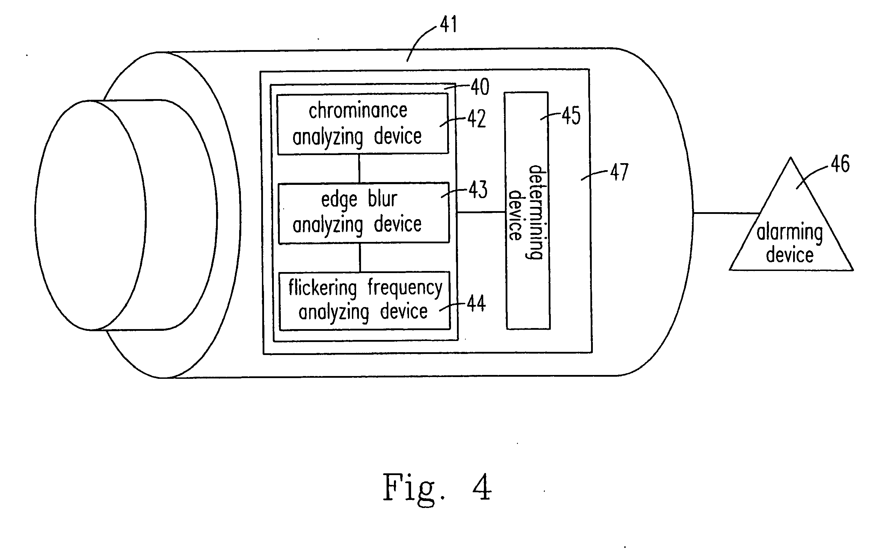

Fig. 4 shows a smoke detecting device according to another embodiment of the present invention. This smoke detecting device includes an image capturing device 41 and an alarm device 46. The image capturing device 41 comprises a digital signal processor 47, which contains an analyzing device 40 and a determining device 45. The analyzing device 40 comprises a chrominance analyzing device 42 analyzing a chrominance variation of the analyzable image, an edge blur analyzing device 43 analyzing an edge blur of the analyzable image, and a flickering frequency analyzing device 44 analyzing a flickering frequency of the analyzable image. The determining device 45 is coupled to the analyzing device 40 for determining if the moving object is a smoke by comparing analyzed results obtained from the analyzing device 40 with a predetermined feature.

In an embodiment, the analyzing device 40 further comprises an action analyzing device detecting a centroid of the moving object and if the moving object is expanding within a predetermined time period, so as to enhance the accuracy of the determining device 45. When the moving object is determined as the smoke by the determining device 45, the alarm device 46 coupled to the digital signal processor 47 will be actuated.

The database in the illustrated smoke detecting device stores lots of smoke feature data, which are the smoke image analyzed results from a lot of fire documentary films or other sources. The predetermined smoke feature functioning as a threshold is obtained by analyzing and statistically calculating the smoke in the fire documentary films or other sources. Furthermore, the illustrated smoke detecting device may further comprise a setting device setting a location in the background image as a no-analyzing location before one of the plurality of images is determined as an analyzable image.

Accordingly, the illustrated smoke detecting method and device can precisely determine whether a fire smoke exists in an image so as to detect and alarm the fire at the early stage. Therefore, the fire may be put out in its early stage and the disaster and casualties may be prevented. Furthermore, the smoke detecting device may be set in an existing network system or a monitoring device, which achieve a better smoke detecting effect without extra expensive construction or facilities.

## Claims

1. A smoke detecting method, the method comprising steps of:
(a) capturing a plurality of images (10), the images comprising a background image and an analyzable image having a moving object;
(b) analyzing the analyzable image, comprising
(b1) analyzing an edge blur of the analyzable image (13), including:
- detecting a first number of edge pixels in a plurality of pixels displaying the moving object in the analyzable image;
- calculating a first strength value of each of the edge pixels in the analyzable image and a second strength value of each corresponding pixel in the background image by at least an edge detection operator; and
- defining a second number of edge blur pixels in the first number of edge pixels by defining an edge pixel in the first number of edge pixels as the edge blur pixel when a ratio of the first to the second strength value is less than a predetermined value; and
(c) determining if the moving object is smoke by comparing a first analyzed result from the step (b1) with a corresponding predetermined feature (16), and determining that the first analyzed result of the step (b1) conforms to the corresponding predetermined feature when a ratio of the second number of edge blur pixels to the first number of edge pixels is within a predetermined range.

2. The smoke detecting method according to claim 1, **characterized in that** the step (b) further comprises a step of (b2) analyzing a chrominance variation of the analyzable image (12) to obtain a second analyzed result.

3. The smoke detecting method according to claim 2, **characterized in that** the step (b2) includes a step of analyzing at least a variation of S, U, V and I values of each pixel displaying the moving object in the analyzable image.

4. The smoke detecting method according to claim 3, **characterized in that** a combination of the step (b2) and the step (c) further comprises steps of:
- analyzing a S value of the each pixel displaying the moving object in the analyzable image if not analyzed yet; and
- determining the second analyzed result of the step (b2) conforms to the corresponding predetermined feature when the S value of the each pixel is less than a predetermined value.

5. The smoke detecting method according to claim 3, **characterized in that** the step (c) further comprises a step of determining that the second analyzed result of the step (b2) conforms to the corresponding predetermined feature when the variations in an absolute value of the U value and an absolute value of the V value are negative when compared with the background image.

6. The smoke detecting method according to claim 3, **characterized in that** a combination of the step (b2) and the step (c) further comprises steps of:
- calculating a difference of respective I values of the each pixel displaying the moving object between the background image and the analyzable image;
- defining a first number of pixels, each of which has the difference smaller than a first predetermined value; and
- determining that the second analyzed result of the step (b2) conforms to the corresponding predetermined feature when a ratio of the first number to a total number of the pixels displaying the moving object is larger than a second predetermined value.

7. The smoke detecting method according to claim 1, **characterized in that** the step (b) further comprises a step of (b2) analyzing a flickering frequency of the analyzable image (14) by a time wavelet calculation to obtain a second analyzed result.

8. The smoke detecting method according to claim 1, **characterized in that** the step (b) further comprises a step of (b2) analyzing a centroid of the moving object and if the moving object is expanding within a predetermined time period (15) to obtain a second analyzed result.

9. The smoke detecting method according to claim 8, **characterized in that** the step (c) further comprises a step of determining that the second analyzed result of the step (b2) conforms to the corresponding predetermined feature when the centroid is moving in one of upward and downward directions within the predetermined time period while the moving object expands within the predetermined time period.

10. The smoke detecting method according to any one of claims 1 to 9, **characterized in that** the step (c) further comprises a step of (c1) determining that the moving object is smoke when at least one of analyzed results from the step (b) conforms to the corresponding predetermined feature (16).

11. The smoke detecting method according to claim 10, **characterized by** comprising a step of actuating an alarm when the moving object is determined as the smoke (18).

12. The smoke detecting method according to claim 1, **characterized by** further comprising a step of a step of setting a location in the background image as a non-analyzing location before the step (a).

13. A smoke detecting device, comprising:
- an image capturing device (41) capturing a plurality of images, the images comprising a background image and an analyzable image having a moving object;
- an analyzing device (40) coupled to the image capturing device (41) and including: an edge blur analyzing device (43) detecting a first number of edge pixels in a plurality of pixels displaying the moving object in the analyzable image, calculating a first strength value of each of the edge pixels in the analyzable image and a second strength value of each corresponding pixel in the background image by at least an edge detection operator, and defining a second number of edge blur pixels in the first number of edge pixels by defining an edge pixel in the first number of edge pixels as the edge blur pixel when a ratio of the first to the second strength value is less than a predetermined value; and
- a determining device (45) coupled to the analyzing device (40) for determining if the moving object is smoke by comparing a first analyzed result obtained from the edge blur analyzing device (43) with a corresponding predetermined feature, and determining that the first analyzed result of the edge blur analyzing device (43) conforms to the corresponding predetermined feature when a ratio of the second number of edge blur pixels to the first number of edge pixels is within a predetermined range.

14. The smoke detecting device according to claim 13, **characterized in that** the analyzing device (40) further comprises a flickering frequency analyzing device (44) analyzing a flickering frequency of the analyzable image to obtain a second analyzed result.

15. The smoke detecting device according to claim 13, **characterized in that** the analyzing device (40) further comprises a chrominance analyzing device (42) analyzing a chrominance variation of the analyzable image to obtain a second analyzed result.

16. The smoke detecting device according to claim 13, **characterized in that** the analyzing device (40) further comprises an action analyzing device (34) analyzing a centroid of the moving object and if the moving object is expanding within a predetermined time period to obtain a second analyzed result.

17. The smoke detecting device according to any one of claims 13 to 16, **characterized in that** the determining device (45) determines that the moving object is smoke when at least one of the analyzed results obtained form the analyzing device (40) conforms to the corresponding predetermined feature.

18. The smoke detecting device according to claim 17, **characterized by** comprising an alarming device (46) coupled to the determining device (45) for actuating an alarm when the moving object is determined as the smoke.

19. The smoke detecting device according to claim 13, **characterized by** comprising a setting device setting a location in the background image as a non-analyzing location before the analyzing device (40) analyzes the analyzable image.

20. The smoke detecting device according to claim 13, **characterized in that** the analyzing device (40) is one of a computer (20) and a digital signal processing chip (37).

## Patentansprüche

1. Verfahren zur Raucherkennung, wobei das Verfahren die folgenden Schritte umfasst:
(a) Aufnehmen von mehreren Bildern (10), wobei die Bilder jeweils ein Hintergrundbild und ein auwertbares Bild mit einem bewegten Objekt umfassen,
(b) Auswerten des auswertbaren Bildes, umfassend die Schritte (b1) Auswerten einer Kantenunschärfe des auswertbaren Bildes (13), umfassend:
- Erfassen einer ersten Anzahl von Kantenpixeln von mehreren Pixeln, welche das bewegte Objekt in dem auswertbaren Bild darstellen,
- Berechnen einer ersten Größe eines Stärkewertes für jeden der Kantenpixel in dem auswertbaren Bild und einer zweiten Größe eines Stärkewertes für jeden entsprechenden Pixel in dem Hintergrundbild mittels wenigstens einem Kantenermittelungsoperators und
- Bestimmen einer zweiten Anzahl von Kantenunschärfepixeln in der ersten Anzahl von Kantenpixeln indem ein Kantenpixels in der ersten Anzahl von Kantenpixeln als der Kantenunschärfepixel bestimmt wird, wenn ein Verhältnis der ersten Größe zu der zweiten Größe kleiner ist als ein vorbestimmter Wert, und
(c) Ermitteln, ob das bewegte Objekt Rauch ist indem ein ersten ausgewerteten Ergebniss aus Schritt (b1) mit einem entsprechenden vorbestimmten Merkmal (16) verglichen wird und ermitteln, dass das erste ausgewertete Ergebnis des Schritts (b1) mit dem entsprechenden vorbestimmten Merkmal übereinstimmt, wenn ein Verhältnis der zweiten Anzahl zu der ersten Anzahl innerhalb eines vorbestimmten Bereichs ist.

2. Verfahren nach Anspruch 1, **dadurch gekennzeichnet, dass** der Schritt (b) einen Schritt (b2) umfasst, bei dem eine Veränderung der Farbart in dem auswertbaren Bild (12) ausgewertet wird, um ein zweites ausgewertetes Ergebnis zu erhalten.

3. Verfahren nach Anspruch 2, **dadurch gekennzeichnet, dass** der Schritt (b2) einen Schritt (c) umfasst, bei dem wenigstens eine Veränderung von S, U, V und I Werten jedes Pixels ausgewertet wird, der das bewegende Objekt in dem auswertbaren Bild darstellt.

4. Verfahren nach Anspruch 3, **dadurch gekennzeichnet dass**, eine Kombination des Schritts (b2) und des Schritts (c) die weiteren Schritte umfasst:
- Auswerten eines S-Wertes für jeden Pixel, der das bewegte Objekt in dem auswertbaren Bild darstellt, falls dieser noch nicht ausgewertet wurde und
- Bestimmen, ob das zweite ausgewertete Ergebnis des Schritts (b2) mit dem entsprechenden vorbestimmten Merkmal übereinstimmt, wenn der S-Wert von jedem Pixel kleiner ist als ein vorbestimmter Wert.

5. Verfahren nach Anspruch 3, **dadurch gekennzeichnet, dass** der Schritt (c) einen Schritt umfasst, bei dem bestimmt wird, ob ein zweites analysiertes Ergebnis des Schritts (b2) mit einem entsprechenden vorbestimmten Merkmal übereinstimmt, wenn die Abweichungen von einem absoluten Wert des U-Wertes und einem absoluten Wert des V-Wertes negativ sind, verglichen mit dem Hintergrundbild.

6. Verfahren nach Anspruch 3, **dadurch gekennzeichnet, dass** eine Kombination des Schrittes (b2) und des Schrittes (c) die folgenden weiteren Schritte umfasst:
- Berechnen eines Unterschieds von entsprechenden I-Werten zwischen dem Hintergrundbild und dem auswertbaren Bild für jeden Pixel, der das bewegte Objekt darstellt,
- Festlegen einer ersten Anzahl von Pixeln, wobei jeder Pixel einen Unterschied aufweist, der kleiner als ein erster festgelegter Wert ist und
- Bestimmen, dass das zweite ausgewertete Ergebnis des Schritts (b2) mit dem entsprechenden vorbestimmten Merkmal übereinstimmt, wenn ein Verhältnis der ersten Anzahl zu einer Gesamtanzahl der Pixel, welche das bewegte Objekt darstellen, größer ist als ein zweiter festgelegter Wert.

7. Verfahren nach Anspruch 1, **dadurch gekennzeichnet, dass** der Schritt (b) einen weiteren Schritt (b2) umfasst, bei dem eine Flimmerfrequenz des auswertbaren Bildes (14) mittels eines Zeitsignals ausgewertet wird, um ein zweites ausgewertetes Ergebnis zu erhalten.

8. Verfahren nach Anspruch 1, **dadurch gekennzeichnet, dass** im Schritt (b) ein weiterer Schritt (b2) ausgeführt wird, bei dem der Schwerpunkt des bewegten Objekts ausgewertet wird, und bestimmt wird, ob sich das bewegte Objekt innerhalb einer vorbestimmten Zeitdauer ausdehnt, um ein zweites ausgewertetes Ergebnis zu erhalten.

9. Verfahren nach Anspruch 8, **dadurch gekennzeichnet, dass** der Schritt (c) einen Schritt umfasst, bei dem bestimmt wird, dass das zweite ausgewertete Ergebnis des Schritts (b2) mit einem entsprechenden vorbestimmten Merkmal übereinstimmt, wenn der Schwerpunkt sich innerhalb einer vorbestimmten Zeitdauer nach oben oder nach unten bewegt, während sich das bewegte Objekt innerhalb der vorbestimmten Zeitdauer ausdehnt.

10. Verfahren nach einem der Ansprüche 1 bis 9, **dadurch gekennzeichnet dass**, der Schritt (c) weiter einen Schritt (c1) umfasst, bei dem bestimmt wird, dass das bewegte Objekt Rauch ist, wenn wenigstens eines der ausgewerteten Ergebnisse aus Schritt (b) mit dem entsprechenden vorbestimmten Merkmal (17) übereinstimmt.

11. Verfahren nach Anspruch 10, **dadurch gekennzeichnet, dass** ein Alarm ausgelöst wird, wenn das bewegte Objekt als Rauch (18) bestimmt wird.

12. Verfahren nach Anspruch 1, **dadurch gekennzeichnet, dass** ein Bereich im Hintergrundbild als nicht auswertbarer Bereich festgelegt wird, bevor Schritt (a) ausgeführt wird.

13. Vorrichtung zum Erkennen von Rauch, mit:
- einer Bildaufnahmeeinrichtung (41), welche mehrere Bilder aufnimmt, wobei die Bilder ein Hintergrundbild und ein auswertbares Bild mit einem bewegten Objekt umfassen,
- eine Analyseeinrichtung (40), die mit der Bildaufnahmeeinrichtung (41) gekoppelt ist, aufweisend eine Kantenunschärfeauswerteeinrichtung (43), welche eine erste Anzahl von Kantenpixeln aus mehreren Pixeln bestimmt, die in dem auswertbaren Bild ein bewegtes Objekt darstellen, die eine erste Größe eines Stärkewertes für jeden der Kantenpixel in dem auswertbaren Bild und eine zweite Größe eines zweiten Stärkewertes für jeden zugeordneten Pixel in dem Hintergrundbild mittels wenigstens einen Kantenermittelungsopperators berechnet und eine zweite Anzahl von Kantenunschärfepixeln in der ersten Anzahl von Kantenpixeln bestimmt, indem ein Kantenpixel in der ersten Anzahl von Kantenpixeln als ein Kantenunschärfepixel bestimmt wird, wenn ein Verhältnis der ersten Größe zu der zweiten Größe kleiner als ein vorbestimmter Wert ist, und
- eine Auswerteeinrichtung (45), die mit der Analyseeinrichtung (40) gekoppelt ist, um zu bestimmen ob das bewegte Objekt Rauch ist, indem ein erstes ausgewertetes Ergebnis, das von dem Kantenunschärfeauswertegerät (43) erhalten wird, mit einem entsprechenden vorbestimmten Merkmal verglichen wird und bestimmt wird, dass das erste ausgewertete Ergebnis des Kantenunschärfeanalyseeinrichtung (43) mit dem entsprechenden vorbestimmten Merkmal übereinstimmt, wenn ein Verhältnis der zweiten Anzahl zu der ersten Anzahl innerhalb eine vorbestimmten Bereichs ist.

14. Vorrichtung nach Anspruch 13, **dadurch gekennzeichnet, dass** die Analyseeinrichtung (40) eine Auswerteeinrichtung (44) zum Auswerten des Frequenzflimmems des auswertbaren Bildes aufweist, um ein zweites ausgewertetes Ergebnis zu erhalten.

15. Vorrichtung nach Anspruch 13, **dadurch gekennzeichnet, dass** die Analyseeinrichtung (40) des Weiteren eine Auswerteeinrichtung (42) zum Bestimmen der Farbwerte aufweist, mit der eine Abweichung der Farbwerte des auswertbaren Bildes bestimmt wird, um ein zweites ausgewertetes Ergebnis zu erhalten.

16. Vorrichtung nach Anspruch 13, **dadurch gekennzeichnet, dass** die Analyseeinrichtung (40) eine Aktionsauswerteeinrichtung (34) aufweist, welche einen Schwerpunkt des bewegten Objekts analysiert und bestimmt, ob sich das bewegte Objekt innerhalb einer vorbestimmten Zeitdauer ausdehnt, um ein zweites ausgewertetes Ergebnis zu erhalten.

17. Vorrichtung nach einem der Ansprüche 13 bis 16, **dadurch gekennzeichnet, dass** die Auswerteeinrichtung (45) bestimmt, dass das bewegte Objekt Rauch ist, wenn wenigstens eines der ausgewerteten Ergebnisse, die von der Analyseeinrichtung (40) erhalten wurden, mit einem entsprechenden vorbestimmten Merkmal übereinstimmt.

18. Vorrichtung nach Anspruch 17, **dadurch gekennzeichnet, dass** eine Alarmeinrichtung (46) gebildet ist, die mit der Auswerteeinrichtung (45) gekoppelt ist, um einen Alarm auszulösen, wenn das bewegte Objekt als Rauch bestimmt wird.

19. Vorrichtung nach Anspruch 13, **gekennzeichnet durch** eine Eingabeeinrichtung, welche einen Bereich im Hintergrundbild als nicht auswertbaren Bereich festlegt, bevor die Analyseeinrichtung (40) das auswertbare Bild analysiert.

20. Vorrichtung nach Anspruch 13, **dadurch gekennzeichnet dass**, die Analyseeinrichtung (40) ein Computer (20) oder ein digitaler Signalverarbeitungschip (37) ist.

## Revendications

1. Procédé de détection de fumée, le procédé comprenant les étapes suivantes :
(a) capture d'une pluralité d'images (10), les images comprenant une image d'arrière-plan et une image analysable ayant un objet mobile ;
(b) analyse de l'image analysable, comprenant
(b1) analyse d'un flou de bord de l'image analysable (13), incluant :
- détection d'un premier nombre de pixels de bord dans une pluralité de pixels affichant l'objet mobile dans l'image analysable ;
- calcul d'une première valeur de robustesse de chacun des pixels de bord dans l'image analysable et d'une deuxième valeur de robustesse de chaque pixel correspondant dans l'image d'arrière-plan grâce à au moins un opérateur de détection de bord ; et
- définition d'un deuxième nombre de pixels de flou de bord dans le premier nombre de pixels de bord en définissant un pixel de bord dans le premier nombre de pixels de bord en tant que pixel de flou de bord lorsqu'un rapport entre la première et la deuxième valeurs de robustesse est inférieur à une valeur
(c) détermination pour savoir si l'objet mobile est de la fumée en comparant un premier résultat analysé de l'étape (b1) avec une caractéristique prédéterminée correspondante (16), et détermination que le premier résultat analysé de l'étape (b1) est conforme à la caractéristique prédéterminée correspondante lorsqu'un rapport entre le deuxième nombre de pixels de flou de bord et le premier nombre de pixels de bord se situe dans les limites d'une plage prédéterminée.

2. Procédé de détection de fumée selon la revendication 1, **caractérisé en ce que** l'étape (b) comprend en outre une étape consistant à (b2) analyser une variation de chrominance de l'image analysable (12) afin d'obtenir un deuxième résultat analysé.

3. Procédé de détection de fumée selon la revendication 2, **caractérisé en ce que** l'étape (b2) comprend une étape d'analyse d'au moins une variation de valeurs S, U, V et I de chaque pixel affichant l'objet mobile dans l'image analysable.

4. Procédé de détection de fumée selon la revendication 3, **caractérisé en ce qu'**une combinaison de l'étape (b2) et de l'étape (c) comprend en outre les étapes suivantes :
- analyse d'une valeur S de chaque pixel affichant l'objet mobile dans l'image analysable en cas d'analyse pas encore réalisée ; et
- détermination que le deuxième résultat analysé de l'étape (b2) est conforme à la caractéristique prédéterminée correspondante lorsque la valeur S de chaque pixel est inférieure à une valeur prédéterminée.

5. Procédé de détection de fumée selon la revendication 3, **caractérisé en ce que** l'étape (c) comprend en outre une étape de détermination **en ce que** le deuxième résultat analysé de l'étape (b2) est conforme à la caractéristique prédéterminée correspondante lorsque les variations d'une valeur absolue de la valeur U et d'une valeur absolue de la valeur V sont négatives en les comparant avec l'image d'arrière-plan.

6. Procédé de détection de fumée selon la revendication 3, **caractérisé en ce qu'**une combinaison entre l'étape (b2) et l'étape (c) comprend en outre les étapes suivantes :
- calcul d'une différence de valeurs I respectives de chaque pixel affichant l'objet mobile entre l'image d'arrière-plan et l'image analysable ;
- définition d'un premier nombre de pixels, chacun d'entre eux ayant une différence inférieure à une première valeur prédéterminée ; et
- détermination que le deuxième résultat analysé de l'étape (b2) est conforme à la caractéristique prédéterminée correspondante lorsqu'un rapport entre le premier nombre de pixels et un nombre total de pixels affichant l'objet mobile est supérieur à une deuxième valeur prédéterminée.

7. Procédé de détection de fumée selon la revendication 1, **caractérisé en ce que** l'étape (b) comprend en outre une étape consistant à (b2) analyser une fréquence de scintillement de l'image analysable (14) grâce au calcul d'une ondelette temporelle afin d'obtenir un deuxième résultat analysé.

8. Procédé de détection de fumée selon la revendication 1, **caractérisé en ce que** l'étape (b) comprend en outre une étape consistant à (b2) analyser un centroïde de l'objet mobile, et si l'objet mobile est en expansion au cours d'une période de temps prédéterminée (15), à obtenir un deuxième résultat analysé.

9. Procédé de détection de fumée selon la revendication 8, **caractérisé en ce que** l'étape (c) comprend en outre une étape de détermination **en ce que** le deuxième résultat analysé de l'étape (b2) est conforme à la caractéristique prédéterminée correspondante lorsque le centroïde se déplace dans l'une des directions vers le haut ou le bas au cours de la période de temps prédéterminée pendant que l'objet mobile est en expansion au cours de la période de temps prédéterminée.

10. Procédé de détection de fumée selon l'une quelconque des revendications 1 à 9, **caractérisé en ce que** l'étape (c) comprend en outre une étape (c1) déterminant que l'objet mobile est de la fumée si au moins l'un des résultats analysés de l'étape (b) est conforme à la caractéristique prédéterminée correspondante (16).

11. Procédé de détection de fumée selon la revendication 10, **caractérisé en ce qu'**il comprenne une étape d'actionnement d'une alarme lorsque l'objet mobile est déterminé comme étant de la fumée (18).

12. Procédé de détection de fumée selon la revendication 1, **caractérisé en ce qu'**il comprend en outre une étape d'une étape de réglage d'un emplacement dans l'image d'arrière-plan comme étant un emplacement de non analyse avant l'étape (a).

13. Dispositif de détection de fumée, comprenant :
- un dispositif de capture d'images (41) capturant une pluralité d'images, les images comprenant une image d'arrière-plan et une image analysable ayant un objet mobile ;
- un dispositif d'analyse (40) couplé au dispositif de capture d'images (41) et comprenant :
un dispositif d'analyse de flou de bord (43) détectant un premier nombre de pixels de bord dans une pluralité de pixels affichant l'objet mobile dans l'image analysable, calculant une première valeur de robustesse de chacun des pixels de bord dans l'image analysable et une deuxième valeur de robustesse de chaque pixel correspondant dans l'image d'arrière-plan grâce à au moins une opérateur de détection de bord, et définissant un deuxième nombre de pixels de flou de bord dans le premier nombre de pixels de bord en définissant un pixel de bord dans le premier nombre de pixels de bord en tant que le pixel de flou de bord lorsqu'un rapport entre les première et deuxième valeurs de robustesse est inférieur à une valeur prédéterminée ; et
- un dispositif de détermination (45) couplé au dispositif d'analyse (40) pour déterminer si l'objet mobile est de la fumée en comparant un premier résultat analysé obtenu du dispositif d'analyse de flou de bord (43) avec une caractéristique prédéterminée correspondante, et pour déterminer que le premier résultat analysé du dispositif d'analyse de flou de bord (43) est conforme à la caractéristique prédéterminée correspondante lorsqu'un rapport entre le deuxième nombre de pixels de flou de bord et le premier nombre de pixels de bord se situe dans les limites d'une plage prédéterminée.

14. Dispositif de détection de fumée selon la revendication 13, **caractérisé en ce que** le dispositif d'analyse (40) comprend en outre un dispositif d'analyse de fréquence de scintillement (44) analysant une fréquence de scintillement de l'image analysable afin d'obtenir un deuxième résultat analysé.

15. Dispositif de détection de fumée selon la revendication 13, **caractérisé en ce que** le dispositif d'analyse (40) comprend en outre un dispositif d'analyse de chrominance (42) analysant une variation de chrominance de l'image analysable afin d'obtenir un deuxième résultat analysé.

16. Dispositif de détection de fumée selon la revendication 13, **caractérisé en ce que** le dispositif d'analyse (40) comprend en outre un dispositif d'analyse d'action (34) analysant un centroïde de l'objet mobile et si l'objet mobile est en expansion au cours d'une période de temps prédéterminée afin d'obtenir un deuxième résultat analysé.

17. Dispositif de détection de fumée selon l'une quelconque des revendications 13 à 16, **caractérisé en ce que** le dispositif de détermination (45) détermine que l'objet mobile est de la fumée si au moins l'un des résultats analysés obtenu du dispositif d'analyse (40) est conforme à la caractéristique prédéterminée correspondante.

18. Dispositif de détection de fumée selon la revendication 17, **caractérisé en ce qu'**il comprenne un dispositif d'alarme (46) couplé au dispositif de détermination (45) pour actionner une alarme lorsque l'objet mobile est déterminé comme étant de la fumée.

19. Dispositif de détection de fumée selon la revendication 13, **caractérisé en ce qu'**il comprenne un dispositif de réglage réglant un emplacement dans l'image d'arrière-plan en tant qu'emplacement de non analyse avant que le dispositif d'analyse (40) analyse l'image analysable.

20. Dispositif de détection de fumée selon la revendication 13, **caractérisé en ce que** le dispositif d'analyse (40) et l'un d'entre un ordinateur (20) et une puce de traitement de signal numérique (37).
